# EUROPÄISCHE PATENTANMELDUNG

(11) **EP 2 765 718 A1**
(43) Veröffentlichungstag der Anmeldung: **13.08.2014**
(21) Anmeldenummer: 14153737.3
(22) Anmeldetag: 04.02.2014
(51) Int. Cl.: H04B 10/25, H04H 40/90, H04N 7/22

(54) **Anordnung mit optischer Sendeeinrichtung für den Einsatz in Satellitenempfangsanlagen**

(30) Priorität: 07.02.2013 DE 102013101236
(71) Anmelder: JULTEC Technology GmbH, 78256 Steisslingen (DE)
(72) Erfinder: Müller, Klaus, 78256 Steisslingen (DE)
(74) Vertreter: Dres Weiss & Arat

(57) **Zusammenfassung**

1. Anordnung, bestehend aus:
einer Zentraleinheit mit mindestens einer Hochfrequenz-Schaltmatrix mit mindestens zwei Eingangsklemmen für die Zuführung von Signalen der ersten Satelliten-Zwischenfrequenz oder eines breitbandigeren Frequenzspektrums und mindestens zwei Ausgangsklemmen, sowie mindestens zwei voneinander unabhängig abstimmbaren selektiven Frequenzumsetzern, welchen den Ausgängen der Hochfrequenz-Schaltmatrix nachgeschaltet sind, sowie einer Zusammenführung der Ausgänge von mindestens zwei Frequenzumsetzern auf einen Knoten, sowie einer optischen Sendeeinheit, bei der das zusammengeführte Signal der Frequenzumsetzer auf einen Lichtträger moduliert wird, sowie einer optischen Übertragungsstrecke, welche das auf den Lichtträger modulierte Signal der Zentraleinheit über eine Strecke zu einer Umsetzereinheit transportiert, sowie einer Umsetzereinheit, welche die auf den Lichtträger modulierten Signale empfängt, wieder in elektrische Signale wandelt und an mindestens einer Klemme bereitstellt, sowie einer weiteren Empfangseinheit in der Umsetzereinheit, welche Steuersignale angeschlossener Empfangsgeräte empfängt, aufbereitet und in Lichtsignale wandelt, sowie einer Übertragungsstrecke, welche die in Licht gewandelten aufbereiteten Steuersignale der Empfangsgeräte zur Zentraleinheit transportiert, sowie einer in die Zentraleinheit integrierte Empfangseinheit für Lichtsignale, welche die von der Empfangseinheit gesendeten Lichtsignale empfängt, sowie einer Interpretationseinheit, welche die empfangenen Lichtsignale von der Umsetzereinheit in Steuersignale für die Ansteuerung der Hochfrequenz-Schaltmatrix und der frequenzmäßigen Abstimmung der selektiven Frequenzumsetzer wandelt.

## Beschreibung

Die Erfindung betrifft eine Anordnung aus Hochfrequenz-Schaltmatrix, Frequenzumsetzern und optischer Sendeeinrichtung für den Einsatz in Satellitenempfangsanlagen.

### Stand der Technik

Satellitenprogramme werden zur besseren Frequenzausnutzung in zwei verschiedenen Polarisationsebenen, üblicherweise horizontal und vertikal, ausgestrahlt. Diese werden im Empfangskonverter (LNB) getrennt empfangen und frequenzmäßig umgesetzt. Sie stehen dann am Ausgang des LNB getrennt voneinander an zwei Buchsen zur Verfügung.

Der Frequenzbereich der Satellitenübertragung wurde zwischenzeitlich so weit erweitert, dass die Einspeisung in ein Antennenverteilnetz in einem gesamten Frequenzblock nicht mehr sinnvoll ist. Daher wurde der Frequenzbereich in ein so genanntes unteres Frequenzband ("Low-Band") und in ein oberes Frequenzband ("High-Band") aufgeteilt, welche durch entsprechende Frequenzumsetzung im LNB auf nahezu gleiche Ausgangsfrequenzbereiche umgesetzt werden.

Somit stehen an jedem LNB insgesamt vier Ausgänge zur Verfügung (vertikal low, horizontal low, vertikal high und horizontal high), welche kontinuierlich das gesamte Angebot des Satelliten in vier Teilen auf vier parallelen Leitungen zur Verfügung stellen.

Da die Verteilung von vier parallelen Leitungen umständlich ist und zudem die Verbreitung über koaxiale Leiter durch eine starke leitungsabhängige Dämpfung begrenzt ist, werden inzwischen Lösungen angeboten, bei denen die vier Frequenzblöcke frequenzmäßig gestapelt und auf einen Lichtträger moduliert werden. Die weitere Verteilung erfolgt dann per Glasfaser, wobei abhängig vom Pegelbudget optische Verteiler eingesetzt werden können, um das Signal auf mehrere Zielpunkte zu verteilen. Während bei koaxialer Verteilung eine dämpfungsbedingte Längenbegrenzung der Sat-ZF bei etwa 250m liegt, kann die Streckendämpfung bei Übertragung per Glasfaser auch bei einigen Kilometern Strecke nahezu vernachlässigt werden. Auf der Gegenseite wird das Lichtsignal wiederum in elektrische Signale gewandelt und die gestapelten Frequenzblöcke entstapelt, so dass diese von handelsüblichen Empfangsgeräten empfangen werden können.

Die Verteilung der Signale innerhalb der Häuser zu den Empfangsstellen in den einzelnen Wohnungen erfolgt üblicherweise koaxial. Dazu ist es notwendig, einzelne Koaxialkabel von dem Wandlerbaustein in die einzelnen Wohnungen zu verlegen. Der Wandlerbaustein kann eine integrierte Umschaltmatrix enthalten, so dass üblicherweise bis zu vier Empfangsgeräte direkt angeschlossen werden können. Sollen mehr als diese vier Empfänger versorgt werden, kann dem Wandler eine Kombination aus Verstärkern und Schaltmatrix, ein so genannter Multischalter, nachgeschaltet werden.

Da jedes Empfangsgerät eine eigene Leitung vom Multischalter abgehend benötigt, müssen meistens mehrere Koaxialleitungen zu den Empfangspunkten in den einzelnen Wohnungen verlegt werden. Dies ist jedoch sehr problematisch, da jede einzelne Koaxialleitung üblicherweise einen Außendurchmesser von etwa 7mm hat und es dadurch problematisch wird, verwendbare Leitungstrassen zu finden. Meistens ist es zudem nicht gewünscht, durch bauliche Maßnahmen neue Trassen zu schaffen.

Die Anzahl der notwendigen koaxialen Leitungen lässt sich durch den Einsatz von teilnehmergesteuerten Einkabelsystemen reduzieren, wobei jedoch weiterhin aufgrund des in dem System fehlenden Kollisions- und Manipulationsschutzes eine koaxiale Ableitung pro Wohnung notwendig ist, was aber in größeren Häuserblöcken auch schon große Probleme verursacht.

Eine Lösung dieses Problems ist, dass man das oben bereits beschriebene auf die Glasfaser modulierte Lichtsignal in jedem Haus weiter aufteilt und in jede Wohnung eine dünne Glasfaser legt. Jede Wohnung wird nun mit einem Wandler ausgestattet, welcher die Lichtsignale zunächst in elektrische Signale wandelt, die frequenzmäßig gestapelten Frequenzblöcke entstapelt und einer Schaltmatrix zuführt, so dass an den Wandler mehrere Empfangsgeräte direkt angeschlossen werden können.

Dieses Verfahren birgt jedoch zwei Nachteile. Aus Sicherheitsgründen ist die optische Leistung sendeseitig begrenzt, ebenso gibt es eine minimale optische Leistung, welcher dem Wandlerbaustein zugeführt werden muss. Das Lichtsignal kann aufgrund der verwendeten Wellenlänge nicht optisch verstärkt werden. Eine Wandlung in elektrische Signale mit anschließender erneuter Aussendung in Lichtform ist aufgrund der Signalbeeinflussung und der enormen Signalbandbandbreite problematisch. Dadurch ist die Anzahl der angeschlossenen Wandlerbausteine begrenzt. Wenn die Wandlerbausteine nun jedoch in jeder Wohnung, und nicht einmal pro Häuserblock angeordnet sind, verringert sich die mögliche Größe des Verteilnetzes erheblich (z.B. 32 Wohnungen statt 32 Häuserblöcke je 32 Wohnungen = 1024 Wohnungen).

Ein weiteres Problem stellt der Mehrsatellitenempfang dar. Programmanbieter haben die Möglichkeit, ihre Programme über verschiedene Satellitensysteme zu verbreiten. Dabei sammeln sich sinnvollerweise die Programme einer Sprache auf einem bestimmten Satellitensystem. Aus diesem Grund ist es notwendig, mehrere Satellitensysteme zu empfangen und deren Signale in den Wohnungen zur Verfügung zu stellen, um auch Fremdsprachenprogramme anbieten zu können. Die Programme mehrerer Satellitensysteme zu übertragen ist entweder dadurch möglich, weitere Lichtleiter parallel zu verwenden (ein Lichtleiter pro Satellitensystem), oder die Signale auf Lichtträger unterschiedlicher Wellenlänge zu modulieren, diese über Wellenlängenmultiplexer zusammenzuführen, über eine gemeinsame Faser zu übertragen, auf der Gegenseite mittels eines Wellenlängenmultiplexers die verschiedenen Lichtwellenlängen wieder zu separieren und die Lichtsignale wieder je einem Wandlerbaustein zusammenzuführen.

Nachteilig an diesem Verfahren ist, dass die Wellenlängenmultiplexer teuer sind und für jedes Satellitensystem ein eigener Wandlerbaustein erforderlich ist. Bei der Verteilung von vier Satellitensystemen müssten also in jeder Wohnung vier Wandlerbausteine angeordnet werden. Aus diesem Grund werden die Wandler für mehrere Satellitensysteme üblicherweise nur zentral pro Häuserblock angeordnet, wobei die Auswahl des gewünschten Satellitensystems auf elektrischer Ebene und die Verteilung zu den einzelnen Empfangsgeräten wiederum koaxial erfolgt, mit dem Nachteil der notwendigen Leitungstrassen.

Eine weitere Möglichkeit wäre der Einsatz von optischen Umschaltern in Verbindung mit einer Steuereinheit in der jeweiligen Wohnung, so dass eines der Satellitensysteme in der optischen Ebene gewählt wird und so nur ein Wandler pro Wohnung erforderlich ist. Der resultierende Nachteil an dieser Lösung ist, dass stets alle angeschlossenen Empfangsgeräte jeweils nur die Programme eines einzigen Satellitensystems empfangen können. Die vorgestellte Möglichkeit ist aufgrund dieser Einschränkung nicht akzeptabel.

### Aufgabe der Erfindung

Aufgabe der Erfindung ist es, bestehende Kabelnetze in Gebäuden besser zu nutzen. Weiterhin ist es Aufgabe der Erfindung, Kabel- bzw. Leitungsnetze in Gebäuden, auch Neubauten, effektiver zu gestalten und deren Platzbedarf zu minimieren. Zudem sollte Aufgabe der Erfindung sein ein möglichst universell einsetzbares System zur Verfügung zu stellen.

### Lösung der Aufgabe

Die vorliegende Erfindung zeigt eine vorteilhafte Lösung eines häufigen Problems in Antennenverteilsystemen mit Einspeisung der ersten Satelliten-Zwischenfrequenz auf.

Die folgend dargestellte Erfindung zeigt zudem eine Lösung auf, welche kostengünstig eine uneingeschränkte Programmauswahl aus mehreren Satellitensystemen ermöglicht, ohne koaxiale Leitungen für die Signalverteilung zu verwenden und ohne jede Wohnung mit mehreren komplexen Wandlerbausteinen ausstatten zu müssen.

Das System besteht im Wesentlichen aus drei Teilen, einer Zentraleinheit, einer optischen Übertragungsstrecke von einer Zentraleinheit in die Wohnung, und einer Umsetzereinheit in der Wohnung.

In einem typischen Ausführungsbeispiel besteht eine erfindungsgemässe Anordnung aus der Zentraleinheit mit mindestens einer Hochfrequenz-Schaltmatrix, die mindestens zwei Eingangsklemmen für die Zuführung von hochfrequenten Signalen der ersten Satelliten-Zwischenfrequenz (Sat-ZF) oder eines breitbandigeren Frequenzspektrums und mindestens zwei Ausgangsklemmen aufweist. Durch den Begriff "hochfrequent" sollen dabei Signale beschrieben werden, die vorzugsweise eine Frequenz von mindestens 205 MHz aufweisen.

Weiterhin besteht die Zentraleinheit der Anordnung aus mindestens zwei voneinander unabhängig abstimmbaren selektiven Frequenzumsetzern, welche den Ausgängen der Hochfrequenz-Schaltmatrix nachgeschaltet sind, sowie einer Zusammenführung der Ausgänge von mindestens zwei Frequenzumsetzern auf einen Knoten. Zudem weist die Zentraleinheit der Anordnung eine erste optische Sendeeinheit auf, bei der das zusammengeführte Signal der Frequenzumsetzer auf einen Lichtträger moduliert wird.

Das auf den Lichtträger modulierte Signal wird über die optische Übertragungsstrecke von der Zentraleinheit zu der Umsetzereinheit transportiert.

Durch die Umsetzereinheit werden die auf den Lichtträger modulierten Signale empfangen und über eine erste Empfangseinheit wieder in elektrische Signale gewandelt und an mindestens einer Klemme bereitgestellt. Zudem ist in der Umsetzereinheit eine weitere Empfangseinheit integriert, welche Steuersignale von angeschlossenen Empfangsgeräten empfängt, aufbereitet und über eine optische Sendeeinheit in Lichtsignale wandelt.

Zudem weist die Anordnung eine Übertragungsstrecke auf, welche die in Licht gewandelten, aufbereiteten Steuersignale der Empfangsgeräte zur Zentraleinheit transportiert.

Ausserdem weist die Anordnung eine in die Zentraleinheit integrierte Empfangseinheit für Lichtsignale auf, welche die von der Umsetzereinheit gesendeten Lichtsignale empfängt, sowie eine Interpretationseinheit, welche die empfangenen Lichtsignale von der Umsetzereinheit in Steuersignale für die Ansteuerung der Hochfrequenz-Schaltmatrix und der frequenzmässigen Abstimmung der selektiven Frequenzumsetzer wandelt.

Weiterhin kann in einem Ausführungsbeispiel durch die Anordnung wahlweise statt der selektiv umgesetzten und zusammengeführten Signale der Frequenzumsetzer auch ein breitbandiges Ausgangssignal der Hochfrequenz-Schaltmatrix auf den Lichtträger der Zentraleinheit moduliert werden. Dies kann beispielsweise durch Umschalten über einen in die Zentraleinheit integrierten Schalter ermöglicht werden.

Zudem sind die selektiven Frequenzumsetzer in der Zentraleinheit der Anordnung in einem Ausführungsbeispiel einzeln aktivierbar und/oder deaktivierbar. Weiterhin soll es möglich sein, an die Umsetzereinheit mehrere Empfangsgeräte anzuschliessen. Vorzugsweise wird in diesem Fall jedem Empfangsgerät ein bestimmter selektiver Frequenzumsetzer in der Zentraleinheit zugeordnet.

In einem Ausführungsbeispiel weist die Anordnung eine logische Auswertung auf, die so konfiguriert werden kann, dass an eine bestimmte Umsetzereinheit angeschlossene Empfangsgeräte nur bestimmte Frequenzumschalter in der Zentraleinheit steuern können. Hierfür wird in einem Ausführungsbeispiel in die Übertragungsstrecke ein Ergänzungsmodul integriert. Dabei kann es sich beispielsweise um eine programmierbare Antennendose handeln oder um ein Ergänzungsmodul, welches in die Umsetzereinheit integriert ist. Weitere dem Fachmann naheliegenden Ausführungsformen sind durch die vorliegende Erfindung umfasst.

In einem Ausführungsbeispiel weist die Anordnung mehrere Umsetzereinheiten auf, die mit einer Zentraleinheit verbunden werden. Hierfür werden die von der Zentraleinheit ausgehenden Lichtsignale aufgeteilt und die von den Umsetzereinheiten zur Zentraleinheit führenden Lichtsignale zusammengeführt.

Weiterhin ist es möglich, dass in der Anordnung die Lichtsignale, die von der Zentraleinheit zu der Umsetzereinheit gesendet werden und die Lichtsignale, die von der Umsetzereinheit zur Zentraleinheit gesendet werden, entweder über zwei getrennte Licht-Übertragungsstrecken, oder bei Verwendung der gleichen Übertragungsstrecke über unterschiedliche Licht-Wellenlängen übertragen werden, wobei die Wellenlängenweichen in die Zentral- und Umsetzereinheiten integriert sein können.

In einem Ausführungsbeispiel werden die Steuersignale von der Umsetzereinheit zur Zentraleinheit nicht per Lichtsignal übertragen, sondern als elektrisches Signal über einen elektrischen Leiter oder als Funksignal. Die hierfür notwendigen Bauteile können dafür beispielsweise in der Zentral- und Umsetzereinheit integriert sein oder auch in Form von Ergänzungsmodulen an die Einheiten angeschlossen werden.

Daneben können der Anordnung die Signale der ersten Satelliten-Zwischenfrequenz an den Klemmen der Hochfrequenz-Schaltmatrix entweder direkt elektrisch, oder als auf einem Lichtträger modulierte Signale, welche von mindestens einem Wandler in elektrische Signale gewandelt werden, zugeführt werden. Somit kann an den Eingangklemmen der Anordnung ein elektrisches oder ein optisches Eingangssignal anliegen.

Weiterhin kann/können die Umsetzereinheit/en komplett aus den angeschlossenen Empfangsgeräten mit Energie versorgt werden. Somit erfolgt die Energieversorgung der Umsetzereinheit beispielsweise durch einen an diese angeschlossenen Satellitenreceiver.

In der Anordnung können in einem Ausführungsbeispiel zusätzlich zu dem Ausgangssignal der Hochfrequenz-Schaltmatrix und/oder durch die selektiven Frequenzumsetzer ausgewählten und zusammengeführten Signale weitere Signale in anderen Frequenzbereichen auf das Lichtsignal der Zentraleinheit moduliert werden. Somit wird es ermöglicht über die Anordnung zusätzlich beispielsweise auch die Signale des Kabelfernsehen und/oder UKW-Signale zu verteilen.

Weiterhin kann die Anordnung für die unabhängige Versorgung mehrerer Empfangsgeräte mit Signalen mehrerer Satellitensysteme über eine einzige Lichtübertragungsstrecke verwendet werden.

Zudem kann die Umsetzereinheit der Anordnung direkt in ein Empfangsgerät, beispielsweise einen Satellitenreceiver, integriert sein. In einem solchen Ausführungsbeispiel kann das Empfangsgerät direkt an die optische Übertragungsstrecke angeschlossen werden.

In einem Ausführungsbeispiel sind innerhalb der Anordnung Funktionsgruppen mehrfach in einem gemeinsamen Gehäuse angeordnet, wobei diese entweder als eigenständige Einheiten, oder in Kombination miteinander wirken. Beispielsweise können mehrere Zentraleinheiten innerhalb eines Gehäuses angeordnet sein. Dadurch kann beispielsweise in einem Wohngebiet die Verteilung der Signale zentral für mehrere Wohnblöcke erfolgen.

Weiterhin kann/können die Zentraleinheit/en der Anordnung neben den Eingängen für die Signalzuführung auch Ausgänge zum Weiterleiten der Signale zu einer weiteren Zentraleinheit bereitstellen.

Zudem kann die Zentraleinheit der Anordnung über mindestens eine automatische Verstärkungsregelung verfügen, so dass die erzeugte Lichtstärke und der Modulationsgrad der auf den Lichtträger aufgebrachten Modulation nahezu unabhängig von der Stärke der, der Zentraleinheit über die Eingangsklemmen zugeführten Signale, sind.

Weiterhin kann die Umsetzereinheit der Anordnung über eine automatische Verstärkungsregelung verfügen, so dass die Stärke des an der Ausgangsbuchse der Umsetzereinheit bereitgestellten Signals nahezu unabhängig von der Lichtstärke am optischen Eingang der Umsetzereinheit ist.

Ausserdem kann der Hochfrequenz-Schaltmatrix eine rauscharme Frequenzumsetzereinheit vorgeschaltet sein, so dass die gesamte Anordnung Bestandteil eines Satellitenempfangskonverters (LNB) zum Empfang von einem oder mehreren Satellitensystemen ist.

Weiterhin soll die Anordnung so ausgeführt werden können, dass an der Umsetzereinheit handelsübliche Satellitenempfangsgeräte betrieben werden können, wobei die Programmauswahl mit standardisierten Steuersignalen für teilnehmergesteuerte Einkabelsysteme stattfindet. Somit soll ermöglicht werden, dass an der Anordnung beispielsweise auch bestehende Satellitenreceiver genutzt werden können.

### Figurenbeschreibung

Weitere Vorteile, Merkmale und Einzelheiten ergeben sich aus der nachfolgenden Beschreibung zweier Figuren. Diese zeigen in
- Figur 1: ein Ausführungsbeispiel einer Zentraleinheit einer erfindungsgemässen Anordnung; und
- Figur 2: ein Ausführungsbeispiel einer Umsetzereinheit einer erfindungsgemässen Anordnung.

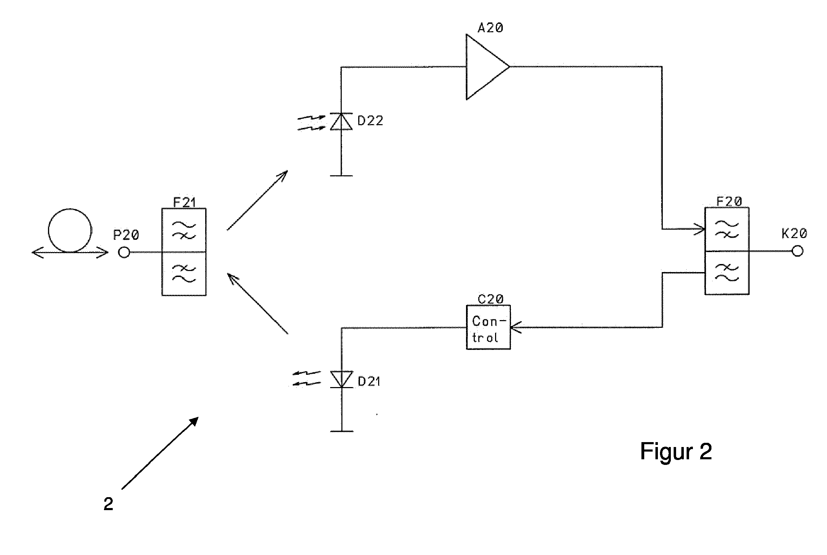

Die Umsetzereinheit 2 (Figur 2) ist mit einer Klemme K20 ausgestattet, an die mindestens ein Empfangsgerät angeschlossen werden kann. Weitere Empfangsgeräte können über einfache Hochfrequenzverteiler angeschlossen werden, wobei diese Verteiler auch bereits in die Umsetzereinheiten integriert sein können. Die angeschlossenen Empfangsgeräte senden bei Auswahl eines bestimmten Fernsehprogramms aus der Senderliste ein Steuersignal z.B. nach dem Einkabelstandard EN50494 oder einem vergleichbaren Standard. Das Steuersignal beinhaltet eine Identifikationsnummer des Empfangsgeräts, die Information darüber, über welche Eingangsklemme das angeforderte Signal der Zentraleinheit zugeführt wird, und die Information darüber, auf welcher Frequenz das Programm übertragen wird.

Das Steuersignal des Empfangsgeräts wird von einer Kontrolleinheit C20 entgegengenommen und aufbereitet. Dabei kann das Steuersignal auch auf Korrektheit und ggf. auch auf Berechtigungen geprüft werden.

Das aufbereitete Steuersignal wird in ein digitales Lichtsignal gewandelt, wobei an die optische Sendeeinheit D21 aufgrund der niedrigen Datenrate des aufbereiteten Steuersignals nur sehr geringe Anforderungen gestellt werden. Das Lichtsignal wird idealerweise über einen Wellenlängenmultiplexer F21 auf den Lichtleiteranschluss P20 geführt. Der Wellenlängenmultiplexer F21 kann sehr einfach gehalten werden, da sich die verwendeten Wellenlängen stark unterscheiden können.

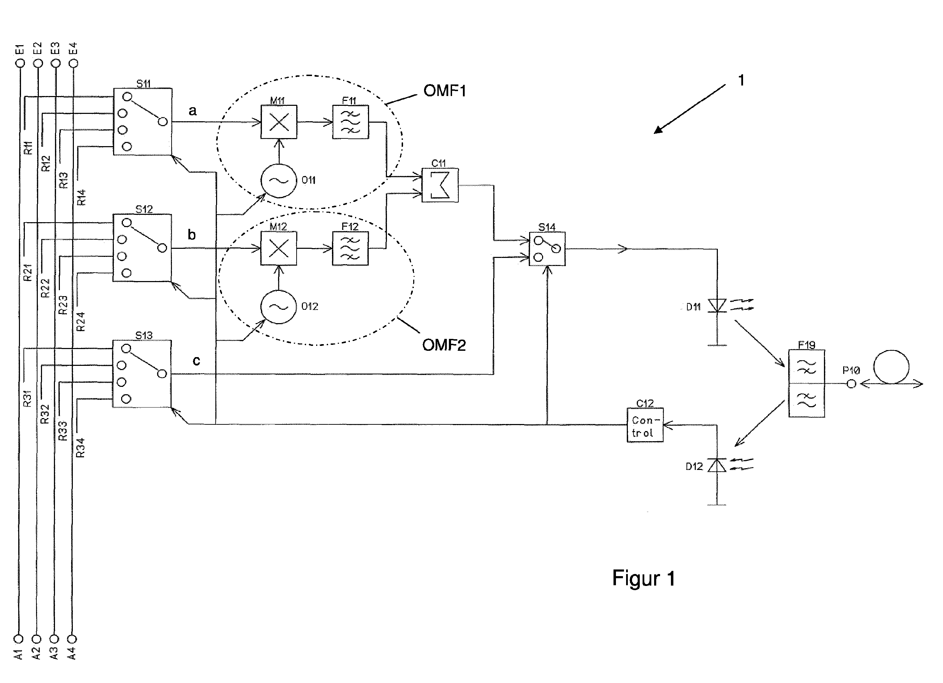

Die Steuersignale werden mittels einer Glasfaserstrecke vom Lichtleiteranschluss der Umsetzereinheit P20 zum Lichtleiteranschluss P10 der Zentraleinheit 1 (Figur 1 und 2) geführt.

In der Zentraleinheit 1 (Figur 1) ist der Lichtleiteranschluss wiederum mit einem Wellenlängenmultiplexer F19 verbunden. Die Steuersignale werden vom Lichtträger über eine optische Empfangseinheit D12 demoduliert und einer Kontrolleinheit C12 zugeführt. Diese interpretiert die ursprünglich vom Empfangsgerät stammenden Steuerdaten (nämlich die Identifikationsnummer des Empfangsgeräts, die Eingangsklemme der HF-Schaltmatrix und die Frequenz der gewünschten Übertragung). Anhand der Identifikationsnummer des Empfangsgeräts wird genau eine Kombination aus Umschalter (beispielsweise S11 - Ausgangsklemme a), Mischer (beispielsweise M11) und Oszillator (beispielsweise O11) angesprochen. Die Information über die Eingangsklemme (E1-E4), über die das angeforderte Signal zugeführt wird, wird zur Umschaltung des Umschalters S11 verwendet. Die Information über die Frequenz der gewünschten Übertragung wird dazu verwendet, den abstimmbaren Oszillator 011 in der Frequenz so einzustellen, dass die gewünschte Übertragung mit dem Mischer M11 so in der Frequenz umgesetzt wird, dass sich diese im Durchlassbereich des Bandpassfilters F11 befindet. Am Ausgang des Filters F11 steht nun die von dem Empfangsgerät angeforderte Übertragung auf einer festen Frequenz zur Verfügung. Weitere Empfangsgeräte senden ihre Steuerbefehle mit einer anderen Identifikationsnummer. Die Kontrolleinheit ordnet dem anderen Empfangsgerät eine andere Kombination aus Umschalter, Oszillator, Mischer und Filter zu (zum Beispiel S12 - Ausgangsklemme b, 012, M12, F12). Die Filter F11, F12 unterscheiden sich dadurch, dass sie jeweils andere Frequenzbereiche passieren lassen. Es entsteht ein Frequenzspektrum, welches genau so viele umgesetzte Übertragungen beinhaltet, wie Empfangsgeräte betrieben werden.

Die Ausgangssignale der Filter werden auf einen Knoten C11 zusammengeführt und über einen später beschriebenen Umschalter S14 der ersten optischen Sendeeinrichtung D11 zugeführt, welche die Signale auf einen Lichtträger moduliert.

Das Lichtsignal wird dem Wellenlängenmultiplexer F19 zugeführt, welcher das ankommende Lichtsignal der Steuerdaten mit dem abgehenden Lichtsignal mit den angeforderten Übertragungen kombiniert bzw. separiert. Das kombinierte Lichtsignal wird dem Lichtleiteranschluss P10 zugeführt und über eine Glasfaserstrecke von der Zentraleinheit 1 zur Umsetzereinheit 2 übertragen.

In der Umsetzereinheit 2 wird das Lichtsignal von dem Lichtleiteranschluss P20 über den Wellenlängenmultiplexer F21, welcher das der Umsetzereinheit zugeführte Licht von dem in der Umsetzereinheit erzeugten trennt, auf einen Lichtempfänger D22 geführt. Die in elektrische Signale gewandelte Information wird verstärkt und über eine Frequenzweiche F20 geführt, welche das hochfrequente Signal mit den Steuersignalen der Empfangsgeräte kombiniert. Das Signal wird den Empfangsgeräten an der Ausgangsklemme K20 bereitgestellt. Diese haben voneinander unabhängigen Zugriff auf uneingeschränkt alle Programme aller in die Zentraleinheit 1 eingespeisten Satellitensysteme.

Für den Sonderfall, das bereits ein älteres Empfangsgerät bei den Bewohnern einer Wohnung vorhanden ist, welches keine Steuersignale für teilnehmergesteuerte Einkabelumsetzungen, sondern nur die Steuersignale zur Auswahl der Eingangsklemme erzeugen kann, ist die Zentraleinheit 1 mit einem weiteren Umschalter S13 (Ausgangsklemme c) zur Auswahl des Eingangssignals ausgestattet, sowie mit dem zuvor erwähnten Umschalter S14. Die Kontrolleinheit C12 erkennt anhand der vom Empfangsgerät gesendeten Steuersignale, welche Art von Empfangsgerät betrieben wird. Werden vom Empfangsgerät nur Steuersignale zum Auswählen einer Eingangsklemme gesendet, so findet die Auswahl der Eingangsklemme in dem Umschalter S13 statt und das ausgewählte Hochfrequenzsignal wird über den Umschalter S14 auf die erste optische Sendeeinheit D11 geführt. Somit wird das gesamte breitbandige Frequenzspektrum auf den Lichtträger moduliert. In dieser Betriebsart ist nur ein einziges Empfangsgerät an der Umsetzereinheit 2 betreibbar.

Sendet das Empfangsgerät Steuersignale für teilnehmergesteuerte Einkabelsysteme, so verbindet der Umschalter S14 die Zusammenführung der Frequenzumsetzungen C11 mit der ersten optischen Sendeeinrichtung D11. Es lassen sich nun an der Umsetzereinheit 2 so viele Empfangsgeräte unabhängig voneinander und ohne Einschränkung in der Programmauswahl betreiben, wie in der Zentraleinheit 1 Umschalter und Umsetzereinheiten vorhanden sind.

Das hier vorgestellte Verfahren bietet eine Reihe von Vorteilen gegenüber herkömmlichen Lösungen.

Ein großer Vorteil ist, dass die Zuführung von der zentralen Verteilung in die einzelnen Wohnungen nicht über ein Koaxialkabel, sondern über eine hauchdünne Glasfaser stattfindet. Diese lassen sich erheblich einfacher in vorhandene Leerrohre einziehen und sind auch als ganzes Bündel dünner als ein einziges Koaxialkabel.

Ein weiterer Vorteil der Glasfaser gegenüber einem Koaxialkabel ist, dass eine galvanische Trennung zwischen der Zentraleinheit und dem Anschlusspunkt in der Wohnung gegeben ist. Potentialverschleppungen und Brummschleifen stellen in ausgedehnten Verteilnetzen ein erhebliches Problem dar, zudem erhöht sich die Gefahr von Überspannungs- und Induktionsschäden im Falle von Blitzeinschlägen in der Umgebung bei Verteilung mit Koaxialkabel.

Die Umsetzereinheit 2 kann bei der hier dargestellten Lösung sehr einfach und damit kostengünstig gestaltet werden, da im Gegensatz zu der herkömmlichen Methode mit der Versorgung mit gestapelten Signalen eines Satellitensystems kein Entstapeln der Frequenzblöcke notwendig ist. Zudem ist nur eine einzige einfache Umsetzereinheit 2 pro Wohnung, und nicht eine komplexere Entstapeleinheit pro Wohnung und Satellitensystem notwendig. Die Umsetzereinheit 2 wird wie auch die Entstapeleinheit vom Betreiber der Verteilanlage zur Verfügung gestellt. Da sich die Umsetzereinheit 2 in der jeweiligen Wohnung befindet und damit im direkten Einfluss der Bewohner ist, ist zudem aus Diebstahlsgründen bei Mieterwechsel und aus Sabotagegründen eine einfache und damit preisgünstige Einheit im Interesse des Anlagenbetreibers.

In weiteren Ausbaustufen wäre es sogar möglich, die Umsetzereinheit 2 direkt in Empfangsgeräte zu integrieren.

Die Zentraleinheit 1 wird üblicherweise zentral in einem Häuserbock an der Stelle angeordnet, wobei durchaus aber auch einzelne, abgesetzte Zentraleinheiten 1 möglich sind. Die Signale der verschiedenen Satellitensysteme können der Zentraleinheit 1 entweder elektrisch oder auf Licht moduliert zugeführt werden. Die Lichtsignale können dabei mit Signalen nur eines Satelliten-Frequenzblocks, oder aber mit mehreren gestapelten Frequenzblöcken moduliert sein.

Es können Lichtsignale über verschiedene Lichtleiter herangeführt werden, oder verschiedene Lichtsignale im Wellenlängenmultiplex zugeführt werden. Mehrere breitbandige Satellitensignale in einem Wellenlängenmultiplex zusammenzufassen setzt hochwertige und damit teure Wellenlängenmultiplexer voraus. Bei der vorliegenden Lösung ist dieser Multiplexer nur einmal pro Häuserblock notwendig, wodurch sich die Materialkosten für den Anlagenbetreiber erheblich reduzieren. Trotzdem hat der Anlagenbetreiber die kostengünstige Möglichkeit, die Signale mehrerer Satelliten anzubieten, ohne ggf. weitere Fasern bei einem Infrastrukturanbieter anmieten zu müssen.

In der Zentraleinheit 1 werden Lichtsignale zunächst in elektrische Signale gewandelt und gegebenenfalls entstapelt.

Alternativ können die Satellitensignale allerdings auch direkt über herkömmliche koaxiale Verteiltechnik herangeführt werden.

Die elektrischen Signale werden über Klemmen (E1-E4) einer Verteilung, welche als Abzweigung mit Richtkopplern (R11-R14, R21-R24 und R31-R34) ausgeführt sein kann, zugeführt. Der Übersichtlichkeit halber ist im Blockschaltbild der Zentraleinheit 1 nur die Verteilung von vier Signalsträngen dargestellt, wobei eine größere Anzahl möglich und üblich ist.

Den Eingangsklemmen (E1-E4) können Ausgangsklemmen (A1-A4) zugeordnet sein, um die bereitgestellten Frequenzblöcke an weitere Zentraleinheiten 1 weiterzureichen.

In einer Zentraleinheit 1 können mehrere voneinander unabhängige Funktionsblöcke in einem Gehäuse zusammengefasst werden, wodurch eine kompakte Einheit zur Versorgung mehrerer Wohnungen entsteht.

Die Zentraleinheit 1 kann aber nicht nur in einem Häuserblock, sondern auch zentral in einem Wohngebiet mit Einfamilienhäusern oder auch in einer Ferienhaussiedlung angeordnet werden. Durch die Übertragung der Signale auf einer Glasfaser verursacht eine längere Strecke nur eine unerhebliche Dämpfung der Lichtsignale. Dadurch ist es kostengünstig möglich, ganze Siedlungen mit uneingeschränkt allen Programmen mehrerer Satellitensysteme zu versorgen.

## Patentansprüche

1. Anordnung, bestehend aus:
• einer Zentraleinheit (1) mit mindestens einer Hochfrequenz-Schaltmatrix (S11-S13) mit mindestens zwei Eingangsklemmen (E1-E4) für die Zuführung von hochfrequenten Signalen der ersten Satelliten-Zwischenfrequenz oder eines breitbandigeren Frequenzspektrums und mindestens zwei Ausgangsklemmen (a-c), sowie
• mindestens zwei voneinander unabhängig abstimmbaren selektiven Frequenzumsetzern (OMF1, OMF2), welche den Ausgängen der Hochfrequenz-Schaltmatrix (S11, S12) nachgeschaltet sind, sowie
• einer Zusammenführung der Ausgänge von mindestens zwei Frequenzumsetzern (OMF1, OMF2) auf einen Knoten (C11), sowie
• einer ersten optischen Sendeeinheit (D11), bei der das zusammengeführte Signal der Frequenzumsetzer (OMF1, OMF2) auf einen Lichtträger moduliert wird,
sowie
• einer optischen Übertragungsstrecke (P10-P20), welche das auf den Lichtträger modulierte Signal der Zentraleinheit (1) über eine Strecke zu einer Umsetzereinheit (2) transportiert,
sowie
• einer Umsetzereinheit (2), welche die auf den Lichtträger modulierten Signale empfängt, über eine erste Empfangseinheit (D22) wieder in elektrische Signale wandelt und an mindestens einer Klemme (K20) bereitstellt, sowie
• einer weiteren Empfangseinheit in der Umsetzereinheit, welche Steuersignale angeschlossener Empfangsgeräte empfängt, aufbereitet und in Lichtsignale wandelt, sowie
• einer Übertragungsstrecke (P20-P10), welche die in Licht gewandelten aufbereiteten Steuersignale der Empfangsgeräte zur Zentraleinheit (1) transportiert, sowie
• einer in die Zentraleinheit (1) integrierte Empfangseinheit (D12) für Lichtsignale, welche die von der Umsetzereinheit (2) gesendeten Lichtsignale empfängt, sowie
• einer Interpretationseinheit (C12), welche die empfangenen Lichtsignale von der Umsetzereinheit (2) in Steuersignale für die Ansteuerung der Hochfrequenz-Schaltmatrix (S11-S13) und der frequenzmäßigen Abstimmung der selektiven Frequenzumsetzer (OMF1, OMF2) wandelt.

2. Anordnung nach Anspruch 1, **dadurch gekennzeichnet,**
• **dass** wahlweise statt der selektiv umgesetzten und zusammengeführten Signale der Frequenzumsetzer (OMF1, OMF 2) auch ein breitbandiges Ausgangssignal der Hochfrequenz-Schaltmatrix (S13) auf den Lichtträger (P10) der Zentraleinheit (1) moduliert wird.

3. Anordnung nach Anspruch 1 oder 2, **dadurch gekennzeichnet,**
• **dass** die Frequenzumsetzer (OMF1, OMF2) in der Zentraleinheit (1) einzeln aktivierbar oder deaktivierbar sind.

4. Anordnung nach einem der Ansprüche 1 bis 3, **dadurch gekennzeichnet,**
• **dass** an die Umsetzereinheit (2) mehrere Empfangsgeräte angeschlossen werden können, wobei jedem Empfangsgerät ein bestimmter selektiver Frequenzumsetzer (OMF1, OMF2) in der Zentraleinheit (1) zugeordnet wird.

5. Anordnung nach einem der Ansprüche 1 bis 4, **dadurch gekennzeichnet,**
• **dass** die Anordnung eine logische Auswertung enthält, welche so konfiguriert werden kann, dass an eine bestimmte Umsetzereinheit (2) angeschlossene Empfangsgeräte nur bestimmte Frequenzumsetzer (OMF1, OMF2) in der Zentraleinheit (1) steuern können.

6. Anordnung nach einem der Ansprüche 1 bis 5, **dadurch gekennzeichnet,**
• **dass** mehrere Umsetzereinheiten (2) mit einer Zentraleinheit (1) verbunden werden, indem die von der Zentraleinheit (1) ausgehenden Lichtsignale aufgeteilt und die von den Umsetzereinheiten (2) zur Zentraleinheit (1) führenden Lichtsignale zusammengeführt werden.

7. Anordnung nach einem der Ansprüche 1 bis 6, **dadurch gekennzeichnet,**
• **dass** die Lichtsignale von der Zentraleinheit (1) zu der Umsetzereinheit (2) und von der Umsetzereinheit (2) zur Zentraleinheit (1) entweder über zwei getrennte Licht-Übertragungsstrecken, oder bei Verwendung der gleichen Übertragungsstrecke über unterschiedliche Licht-Wellenlängen übertragen werden, wobei die Wellenlängenweichen in die Einheiten integriert sein können.

8. Anordnung nach einem der Ansprüche 1 bis 7, **dadurch gekennzeichnet,**
• **dass** die Steuersignale von der Umsetzereinheit (2) zur Zentraleinheit (1) nicht per Lichtsignal, sondern als elektrisches Signal über einen elektrischen Leiter oder als Funksignal übertragen werden.

9. Anordnung nach einem der Ansprüche 1 bis 8, **dadurch gekennzeichnet,**
• **dass** der Anordnung die Signale der ersten Satelliten-Zwischenfrequenz den Klemmen (E1 - E4) der Hochfrequenz-Schaltmatrix (S11-S13) entweder direkt elektrisch, oder als auf einen Lichtträger modulierte Signale, welche von mindestens einen Wandler in elektrische Signale gewandelt werden, zugeführt werden.

10. Anordnung nach einem der Ansprüche 1 bis 9, **dadurch gekennzeichnet,**
• **dass** die Umsetzereinheit (2) komplett aus den angeschlossenen Empfangsgeräten mit Energie versorgt wird und/oder, dass die Umsetzereinheit (2) direkt in ein Empfangsgerät integriert ist.

11. Anordnung nach einem der Ansprüche 1 bis 10, **dadurch gekennzeichnet,**
• **dass** zusätzlich zu dem Ausgangssignal der Hochfrequenz-Schaltmatrix (S11-S13) und/oder durch die selektiven Frequenzumsetzer (OMF1, OMF2) ausgewählten und zusammengeführten Signale weitere Signale in anderen Frequenzbereichen auf das Lichtsignal der Zentraleinheit moduliert werden.

12. Anordnung nach einem der Ansprüche 1 bis 11, **dadurch gekennzeichnet,**
• **dass** diese Anordnung für die unabhängige Versorgung mehrerer Empfangsgeräte mit Signalen mehrerer Satellitensysteme über eine einzige Lichtübertragungsstrecke verwendet wird.

13. Anordnung nach einem der Ansprüche 1 bis 12, **dadurch gekennzeichnet,**
• **dass** die Zentraleinheit (1) über mindestens eine automatische Verstärkungsregelung verfügt, so dass die erzeugte Lichtstärke und der Modulationsgrad der auf den Lichtträger aufgebrachten Modulation nahezu unabhängig von der Stärke der der Zentraleinheit (1) über die Eingangsklemmen (E1-E4) zugeführten Signale sind.

14. Anordnung nach einem der Ansprüche 1 bis 13, **dadurch gekennzeichnet,**
• **dass** die Umsetzereinheit (2) über eine automatische Verstärkungsregelung (A20) verfügt, so dass die Stärke des an der Ausgangsbuchse (K20) bereitgestellten Signals nahezu unabhängig von der Lichtstärke am optischen Eingang der Umsetzereinheit ist.

15. Anordnung nach einem der Ansprüche 1 bis 14, **dadurch gekennzeichnet,**
• **dass** an der Umsetzereinheit (2) handelsübliche Satellitenempfangsgeräte betrieben werden, wobei die Programmauswahl mit standardisierten Steuersignalen für teilnehmergesteuerte Einkabelsysteme stattfindet.
